# EUROPEAN PATENT SPECIFICATION

(11) **EP 1 304 027 B1**
(45) Date of publication and mention of the grant of the patent: **07.02.2007**
(21) Application number: 02257221.8
(22) Date of filing: 17.10.2002
(51) Int. Cl.: A01D 43/063

(54) **Lawnmower**
Rasenmäher
Tondeuse à gazon

(30) Priority: 19.10.2001 GB 0125225
(43) Date of publication of application: 23.04.2003
(73) Proprietor: Husqvarna UK Limited, County Durham, DL5 6UP (GB)
(72) Inventor: Trevor, Michael Darmen, Darlington, Co Durham DL3 8UF (GB); Whittaker, Colin, Bishop Auckland, Co Durham DL14 0SU (GB); Lawson, Ian, Newton Aycliffe, Co Durham DL5 4RX (GB)
(74) Representative: Pratt, David Martin

(56) References cited:
- EP-A- 0 253 231
- EP-A- 0 457 433
- EP-A- 0 579 386
- EP-A- 0 634 090
- EP-A- 0 821 868
- DE-A- 2 930 042
- GB-A- 2 297 889

## Description

This invention relates to a lawnmower, and in particular to a so-called "wheeled rotary lawnmower" which includes a deck mounted on wheels, a cutting chamber defined within the deck, a cutter blade or blades rotatably mounted within the cutting chamber about a substantially vertical axis, and a grass collection receptacle for collecting cut grass.

EP-579386A discloses a wheeled rotary lawnmower whose deck includes access means in the form of an aperture or duct which leads cut grass to the grass collection receptacle. A fan blows air through the cutting chamber and the access means into the grass collection receptacle, sucks air from the receptacle for re-circulation. While this type of lawnmower is effective, it is often necessary to direct the air and cut grass around a curve or bend in order to take it from the cutting chamber to the grass collection receptacle. This is of particular concern where the grass collection receptacle is located above the deck, since the air and cut grass must pass through a longer and tighter curve than if the receptacle is located outwardly of (for example, behind) the deck. Where the grass collection receptacle is above the deck, the cut grass is very difficult to re-direct, since it tends to drop out of a curved stream of air and clog the lawnmower.

EP-821869A discloses a wheeled rotary lawnmower which attempts to overcome this problem by positioning the grass collection receptacle substantially centrally within the wheel base of the lawnmower, and by providing a secondary air stream which is directed into the grass collection receptacle to complement the main air flow through the receptacle, and to assist in deflecting the cut grass entrained in the main air stream into the interior of the receptacle.

Although this lawnmower is an improvement on earlier wheeled rotary lawnmowers, it does still suffer from problems in turning the grass and air around the relatively long and tight curve between the cutting chamber and the interior of the grass collection receptacle, particularly in wet conditions, when the cut grass tends to stick to the wall of the curve, eventually causing a blockage, and thereby preventing any further filling of the grass collection receptacle.

The aim of the invention is to provide a wheeled rotary lawnmower which has a reduced or eliminated clogging problem.

The present invention provides a lawnmower comprising a deck defining a cutting chamber, the deck including an outlet for passage of cut grass from the cutting chamber, a cutter blade rotatable within the cutting chamber about a substantially vertical axis, and a grass collection receptacle including an air-permeable region and an inlet for entry of the cut grass from the cutting chamber, the deck being mounted on rotary members at forward and rearward positions, wherein the inlet of the grass collection receptacle is provided in a front wall of the receptacle, the outlet of the cutting chamber is aligned with the inlet of the grass collection receptacle, characterised in that the grass collection receptacle is positioned above the deck substantially entirely within the wheelbase of the lawnmower, a substantially straight passage being disposed between the outlet of the cutting chamber and the inlet of the grass collection receptacle, and the deck supporting a housing which encloses the grass collection receptacle.

Throughout this specification, the terms "forward" and "rearward" should be taken to mean those positions remote from and adjacent to respectively the user of the lawnmower when the lawnmower is being operated in the usual manner, that is to say with the user pushing the lawnmower from "behind". Similarly, the "front wall" of the grass collection receptacle is that wall remote from the user when the lawnmower is being operated in the usual manner.

Preferably, the lawnmower further comprises a motor positioned within the housing, the motor being in drivable engagement with the cutter blade. Conveniently, the cutting chamber is positioned forwardly of the grass collection receptacle.

In a preferred embodiment, the grass collection receptacle is an open-topped receptacle having at least one of its walls formed with air-permeable portions.

Advantageously, the grass collection receptacle is provided with a pair of handles positioned at the top of a pair of opposed wall portions.

Preferably, the housing is provided with an upwardly-open aperture through which the grass collection receptacle can be inserted into, and removed from, the housing, and wherein a cover is provided for closing said aperture when the lawnmower is in use. Conveniently, the cover is pivotally mounted to the housing for movement between a first position, in which the grass collection receptacle can enter or leave the housing, and a second position in which the aperture is closed.

The lawnmower may further comprise a flap associated with the deck, the flap being movable between a first position, in which the outlet of the cutting chamber is closed, and a second position in which the said outlet is open for the passage of cut grass therethrough. Advantageously, the flap is pivotally mounted to the deck in such a position that it is held in its second position by the grass collection receptacle when the inlet of the receptacle is aligned with the outlet of the cutting chamber. Preferably, the flap is spring biased towards its first position.

Preferably, when the cover is in the closed position, it provides a substantially airtight seal against those portions of the housing defining the upwardly-open aperture.

In a preferred embodiment, the rotary members are wheels. Preferably, there are two wheels at the front of the deck and two wheels at the rear of the deck. Conveniently, the lawnmower further comprises a roller positioned between the two rear wheels.

It will be appreciated that, where the rotary members are not wheels, the term "wheelbase" should be taken to mean the distance between the axis of rotation of the forward and rearward rotary members.

A wheeled rotary lawnmower constructed in accordance with the invention will now be described in greater detail, by way of example, with reference to the drawings, in which:-
Figure 1 is a schematic, sectional side elevation of the lawnmower;
Figure 2 is a plan view of a lawnmower; and
Figure 3 is a side elevation of the lawnmower.

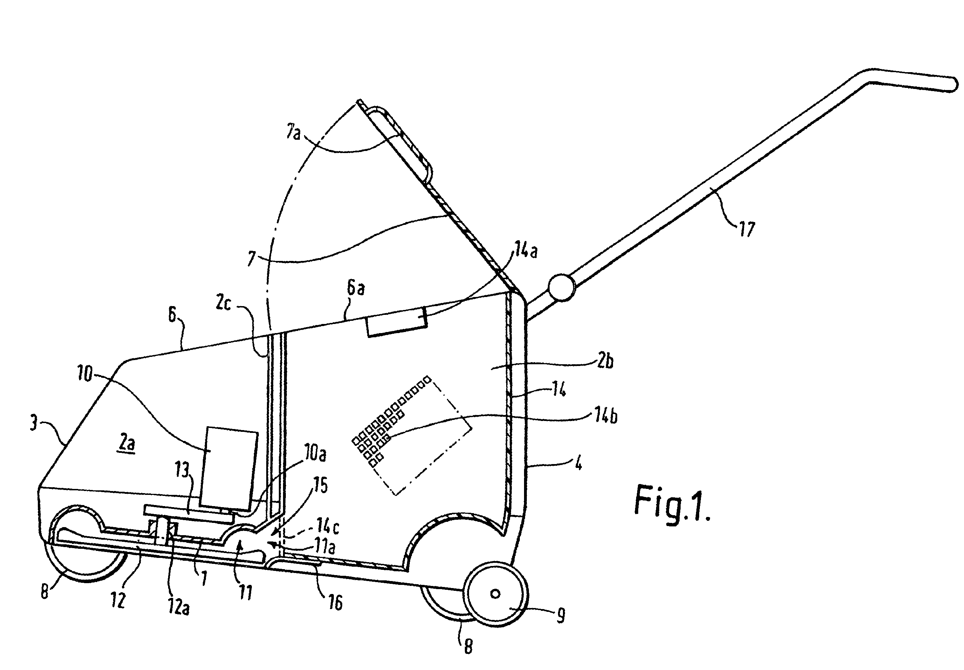

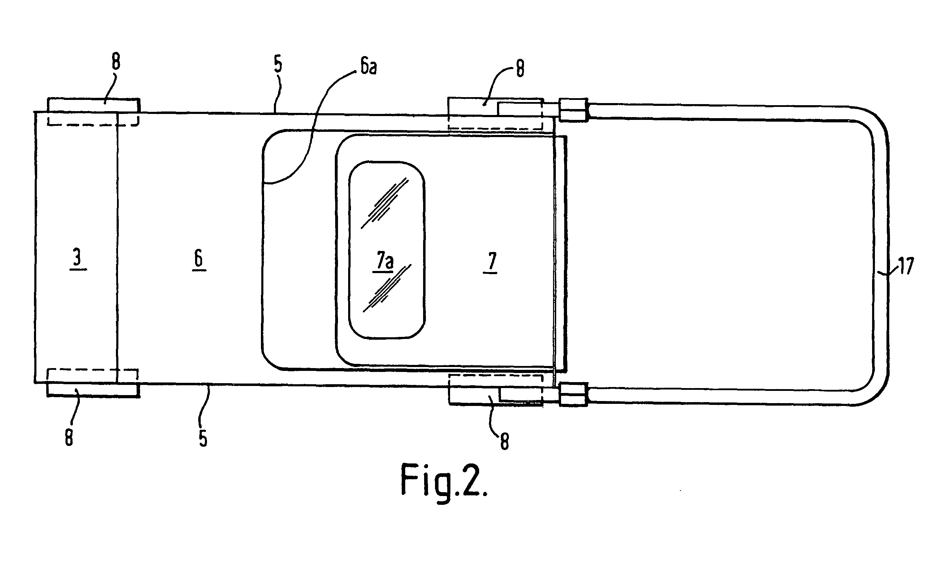

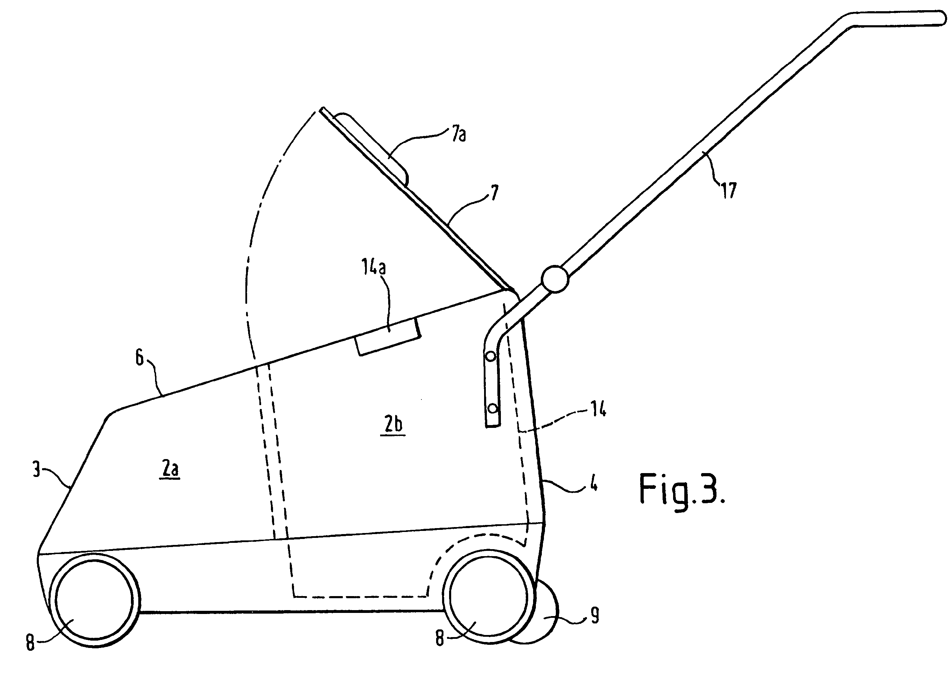

Referring to the drawings, Figures 1 to 3 show a lawnmower having a base or deck 1, and a housing 2 mounted above the deck. The housing 2 defines a large internal cavity bounded by a sloping front wall 3, a rear wall 4, side walls 5 and a top wall 6. The top wall 6 is apertured at 6a, a cover 7 being pivotally attached to the top of the rear wall 4, so as to be movable between an open position (as seen in the drawings), and a closed position in which it overlies the aperture 6a. The deck 1 is supported by wheels 8 at the front and rear thereof, and a rear roller 9 is provided for generating a "stripe" appearance on a cut lawn.

The housing 2 is constituted by two moulded parts 2a and 2b, the forward housing part 2a being formed with a rear wall 2c that separates the two housing parts. The forward housing part 2a encloses a motor 10, which is mounted above a cutting chamber 11 formed beneath the deck 1, and the rearward part 2b is open towards ground datum. A cutter blade 12 is rotatably mounted within the cutting chamber 11 I for rotation about a substantially vertical axis. The output shaft 10a of the motor 10 is off-set from the shaft 12a of the cutter blade 12, drive being transferred from the motor output shaft to the cutter blade shaft by means of a drive belt 13. A removable grass collection receptacle 14 is mounted within the rearward part 2b of the housing 2. An impeller (not shown) is provided for increasing the flow of air from the cutting chamber 11 to the receptacle 14, the impeller being mounted on the shaft 12a above the cutter blade 12.
The motor 10 is a self-cooled motor having an internal fan (not shown) which results in improved motor durability, as cooling is maintained when the motor is operating under load because the internal fan is still moving large volumes of air. Thus, the motor 10 is protected from overheating, even if the drive belt 13 fails, and cooling from the impeller is lost. The belt 13 is of the V-belt type and co-operates with a matching pulley (not shown) on the motor shaft 10a and with a plain / smooth pulley (not shown) which operates a braking device (not shown) on the shaft 12a. Alternatively, the belt 13 is a toothed drive belt which co-operates with toothed pulleys on the motor drive shaft 10a and the shaft 12a. This type of drive belt is manufactured to tighter length tolerances than "smooth" drive belts normally used in lawnmowers, so that the pulleys can be mounted on fixed centres, resulting in improved reliability (there being substantially no loss of belt tension during product life), and lower assembly costs. Moreover, because of the toothed engagement of the belt 13 with the pulleys, there is reduced noise at start-up, as there is no danger of the belt slipping.

The receptacle 14 is provided with a pair of handles 14a for facilitating removal of the receptacle from the lawnmower when the receptacle is to be emptied, and for returning the receptacle after emptying. The handles 14a are positioned at opposite sides of the receptacle 14 across the width of the lawnmower. Alternatively, the handles 14a could be positioned at the front and back of the receptacle. In either case, the provision of the handles 14a allows easy removal of the receptacle 14 from the lawnmower, via the aperture 6a, by the operator using both hands. The cover 7 is provided with a transparent panel 7a so that the operator can see into the receptacle 14 to ascertain when it needs emptying. The receptacle 14 is of the basket type with an open top, and has perforations 14b in each of its side walls. Perforations may also be provided in the front and rear walls and/or in the floor of the receptacle 14. Where the receptacle 14 has perforations in all sides and the base, improved grass compaction results. Thus, air blown into the receptacle 14 by the cutter blade 12 can easily vent through the perforations in the receptacle sides and base, that is to say the flow of air is not obstructed as the receptacle fills. In addition, air is continuously drawn by the impeller through the perforations at the front side of the receptacle 14 to aid compaction at the front, and then exhausts back into the cutting chamber 11. In the closed position, the cover 7 rests against the portions of the top wall 6 defining the aperture 6a so that the housing 2 defines a substantially airtight enclosure around the grass collection receptacle 14.

The receptacle 14 is formed with an inlet aperture 14c at its forward end, the aperture being aligned with a short, straight duct 15 leading from an outlet 11a of the cutting chamber 11. A spring mounted safety flap 16 is provided for closing the duct 15 when the receptacle 14 is removed from the lawnmower. A handle 17 is provided for an operator to control the lawnmower.

In operation, the motor drives the cutter blade 12 which generates a low pressure within the cutting chamber 11, causing air to be drawn in under the perimeter of the deck 1 from the high-pressure area outside the deck. The air and entrained cut grass then pass from the cutting chamber 11 through the duct 15 and into the receptacle 14. Because of its perforated nature, air (but not grass) can pass from within the receptacle 14 outwardly and then downwardly within the lawnmower body, finally exhausting through an opening (not shown) in the base of the deck 1, and out to the atmosphere. This downward exhaustion of air is assisted by the airtight fit between the cover 7 and the top wall 6 of the housing 2.

Because the duct 15 is short and straight, there is a substantially reduced chance that the passageway between the cutting chamber 11 and the receptacle 14 will clog, even with wet grass, in use. This lawnmower has the advantage of having the grass collection receptacle 14 mounted within the wheelbase of the mower, thereby ensuring that the weight of cut grass within the receptacle is positioned generally over the centre of gravity of the machine. This facilitates manoeuvrability of the lawnmower, even as the receptacle 14 fills with grass.

As the rearward part 2b of the lawnmower housing is open to ground datum beneath the receptacle 14, air can readily escape from the receptacle (via the perforations in its base and sides), resulting in a noise reduction from the lawnmower. The easier escape of air also improves grass compaction. Moreover, any grass entrained in the escaping air is deposited on the lawn, out of sight of the user. Consequently, a reduction in the amount of grass "sprayed" out by the lawnmower results. This also has the effect of keeping the lawnmower cleaner - in a conventional lawnmower grass "sprays" out of perforations in the sides and rear of the grass box, some of which will stick to the lawnmower and to the user's clothing.

A major user benefit of the lawnmower described above is the ease with which the grass collection receptacle 14 can be removed using both hands. Thus, whilst on other types of lawnmower, the grass box has to be removed for emptying using one hand to hold open the safety flap, and the other to lift the grass box away from the lawnmower, with the lawnmower described above, the cover 7 can first be raised and left in an open position (for example resting against the handle 17), after which the receptacle can be removed using both hands. The receptacle 14 can then be inverted to empty out the cut grass. The large, open area at the top of the receptacle 14 allows the grass to fall out easily. This is to be contrasted with many traditional rear-mounted receptacles which have a small opening for entry of cut grass from the mower, the small opening acting also as an exit aperture through which the cut grass must be shaken or pulled out. As the receptacle 14 is removed, the safety flap 16 automatically covers the duct 15 under the action of its spring, thereby preventing access to the cutter blade 12 should this still be rotating. The lawnmower could be additionally modified to incorporate a safety switch which would be operated automatically when the cover 7 is open, thereby immobilising the motor and cutting off drive to the cutter blade 12.

Another advantage of positioning the receptacle 14 within the wheelbase of the lawnmower is improved safety. Thus, if a stone or other hard object is thrown back by the cutter blade 12, the operator positioned behind the receptacle 14 is protected by the two-walled construction (that is to say the rear wall of the receptacle and the rear wall 4 of the housing 2) of the mower. Another advantage is that the housing 2 constitutes a strong, rigid structure that is both cost effective to manufacture and assemble. This structure may also contribute to lower noise levels than with traditional lawnmowers where the grass bag or box is mounted externally on the rear of the product.

A further advantage is that the handle 17 can be attached to the housing 2 in a simple manner, leading both to lower manufacturing costs and improved operating features.

The construction of the lawnmower having a smooth enclosed shape defined by the housing 2 is less likely to become entangled in, or damage, flowers, shrubs etc in flower beds adjacent to a lawn being cut. On a conventional lawnmower, the grassbox is held on location features, typically provided at the rear of the machine. In such a case, it is sometimes difficult for the user to locate the grassbox properly, as the spring safety flap has to be held open by one hand, whilst an attempt to locate the grassbox is made using the other hand. With the lawnmower described above, however, as the receptacle 14 is located, in use, entirely within the housing of the lawnmower, it is easily located in alignment with the duct 15 by being dropped in.

Moreover, the rear of the grassbox of a conventional lawnmower can be positioned so close to where the user grips the lawnmower's handle that, in some instances, the user can inadvertently kick the grassbox and remove it from engagement with the lawnmower. With the lawnmower described above, however, this cannot happen, as the receptacle 14 is located within the housing of the lawnmower.

Yet another advantage is that the roller 9 is mounted at the very rear of the lawnmower, thereby facilitating the provision of a superior "striped" finish to a cut lawn. This is to be contrasted with many known types of lawnmower, in which the roller is positioned between the cutting chamber and the grass collection receptacle, thereby complicating the passage of air with entrained grass into the receptacle. As the roller 9 is positioned behind the receptacle 14, the path for passage of air and grass cuttings into the receptacle is simplified, and the action of the roller on a lawn is not affected by blown air and entrained grass cuttings, thereby resulting in the improved "striped" effect referred to above. The rear roller 9, which is used for producing a striped finish to a cut lawn, can be positioned between the rear wheels 9. This allows the duct 15 between the cutting chamber 11 and the receptacle 14 to be reduced in length. This, in turn, reduces the length of the lawnmower, and reduces the length of grass that can plug the duct 15. Moreover, if the duct 15 is so plugged, it is easier to clear, as the plug will be smaller than with a conventional lawnmower.

It will be apparent that the lawnmower described above could be modified in a number of ways. For example, air exiting the receptacle 14 could be drawn into the cutting chamber 11, thereby assisting with the compacting of cut grass within the receptacle. It would also be possible to drive the cutter blade 12 directly, by connecting the output shaft 10a of the motor directly to the shaft 12a the cutter blade 12. It would also be possible to replace the wheels 8 by other forms of rotary member such as balls or rollers. The front wheels (or other forms of rotary member) could be positioned some way from the front of the deck 1, provided that the grass collection receptacle 14 remained within the wheelbase of the lawnmower. Thus, the front wheels (rotary members) could be positioned at, or towards, the rear of the cutting chamber 11, thereby enabling the mower to cut to the edge of a lawn without the front wheels (rotary members) going over the edge of the lawn which could cause the front of the mower to dip, leading to scuffing of the lawn edge by the cutter blade 12. A recess could also be included in the base of the receptacle 14 to act as an additional hand grip to assist in emptying the receptacle. It would also be possible to mount the roller 9 between the two rear wheels 8 towards the rear of the machine, rather than at the very rear.

In another modified arrangement, a petrol engine could be used instead of the electric motor 10.

## Claims

1. A lawnmower comprising a deck (1) defining a cutting chamber (11), the deck including an outlet (11a) for passage of cut grass from the cutting chamber, a cutter blade (12) rotatable within the cutting chamber about a substantially vertical axis, and a grass collection receptacle (14) including an air-permeable region (14b) and an inlet (14c) for entry of the cut grass from the cutting chamber, the deck being mounted on rotary members (8, 9) at forward and rearward positions, wherein the inlet of the grass collection receptacle is provided in a front wall of the receptacle, the outlet of the cutting chamber is aligned with the inlet of the grass collection receptacle, **characterised in that** the grass collection receptacle is positioned above the deck substantially entirely within the wheelbase of the lawnmower, a substantially straight passage (15) being disposed between the outlet of the cutting chamber and the inlet of the grass collection receptacle, and the deck supporting a housing (2), which encloses the grass collection receptacle.

2. A lawnmower as claimed in claim 1, further comprising a motor (10) positioned within the housing (2), the motor being in drivable engagement with the cutter blade (12).

3. A lawnmower as claimed in claim 1 or claim 2, wherein the cutting chamber (11) is positioned forwardly of the grass collection receptacle (14).

4. A lawnmower as claimed in any one of claims 1 to 3, wherein the grass collection receptacle (14) is an open-topped receptacle having at least one of its walls formed with air-permeable portions (14b).

5. A lawnmower as claimed in any one of claims 1 to 4, wherein the grass collection receptacle (14) is provided with a pair of handles (14a) positioned at the top of a pair of opposed wall portions.

6. A lawnmower as claimed in any one of claims 1 to 5, wherein the housing (2) is provided with an upwardly-open aperture (6a) through which the grass collection receptacle (14) can be inserted into, and removed from, the housing, and wherein a cover (7) is provided for closing said aperture when the lawnmower is in use.

7. A lawnmower as claimed in claim 6, wherein the cover (7) is pivotally mounted to the housing (2) for movement between a first position, in which the grass collection receptacle (14) can enter or leave the housing, and a second position in which the aperture (6a) is closed.

8. A lawnmower as claimed in any one of claims 1 to 7, further comprising a flap (16) associated with the deck (1), the flap being movable between a first position, in which the outlet (11a) of the cutting chamber (11) is closed, and a second position in which the said outlet is open for the passage of cut grass therethrough.

9. A lawnmower as claimed in claim 8, wherein the flap (16) is pivotally mounted to the deck (1) in such a position that it is held in its second position by the grass collection receptacle (14) when the inlet (14c) of the receptacle is aligned with the outlet (11a) of the cutting chamber (11).

10. A lawnmower as claimed in claim 8 or claim 9, wherein the flap (16) is spring biased towards its first position.

11. A lawnmower as claimed in any one of claims 7 to 10, wherein, when the cover (7) is in the closed position, it provides a substantially airtight seal against those portions of the housing (2) defining the upwardly-open aperture (6a).

12. A lawnmower as claimed in any one of claims 1 to 11, wherein the rotary members are wheels (8, 9).

13. A lawnmower as claimed in claim 12, wherein there are two wheels (8) at the front of the deck and two wheels (9) at the rear of the deck.

14. A lawnmower as claimed in claim 13, further comprising a roller (8) positioned between the two rear wheels (9).

15. A lawnmower as claimed in any one of claims 1 to 14, wherein the inlet of the grass collection receptacle is provided in the frontmost wall of the receptacle.

## Patentansprüche

1. Rasenmäher umfassend ein Abdeckgehäuse (1), das eine Schneidkammer (11) abgrenzt, wobei das Abdeckgehäuse Folgendes beinhaltet: einen Auslass (11a) für einen Durchlauf von geschnittenen Gras von der Schneidkammer, ein Schneidmesser (12), das um eine im wesentlichen vertikale Achse drehbar innerhalb der Schneidkammer vorgesehen ist, sowie einen Grassammelbehälter (14), der einen luftdurchlässigen Bereich (14b) und einen Einlass (14c) für ein Eintreten von dem geschnittenen Gras von der Schneidkammer beinhaltet, wobei das Abdeckgehäuse an vorne gelegenen und hinten gelegenen Stellen an drehbaren Bauelementen (8, 9) angebracht ist und wobei der Einlass des Grassammelbehälters in einer Vorderwand des Behälters vorgesehen ist und der Auslass der Schneidkammer zu dem Einlass des Grassammelbehälters ausgerichtet ist, **dadurch gekennzeichnet, dass** der Grassammelbehälter über dem Abdeckgehäuse im wesentlichen vollständig innerhalb des Radstandes des Rasenmähers angeordnet ist, wobei ein im wesentlichen gerader Durchgang (15) zwischen dem Auslass der Schneidkammer und dem Einlass des Grassammelbehälters vorgesehen ist und das Abdeckgehäuse ein Gehäuse (2) abstützt, das den Grassammelbehälter umschließt.

2. Rasenmäher gemäß Anspruch 1, zusätzlich umfassend einen Motor (10), der innerhalb des Gehäuses (2) angeordnet ist, wobei der Motor in Antriebseingriff mit dem Schneidmesser (12) steht.

3. Rasenmäher gemäß Anspruch 1 oder 2, wobei die Schneidkammer (11) vor dem Grassammelbehälter (14) angeordnet ist.

4. Rasenmäher gemäß einem der Ansprüche 1 bis 3, wobei der Grassammelbehälter (14) ein nach oben offener Behälter ist, bei dem wenigstens eine seiner Wände luftdurchlässige Bereiche (14b) aufweist.

5. Rasenmäher gemäß einem der Ansprüche 1 bis 4, wobei der Grassammelbehälter (14) mit einem Paar von Griffen (14a) versehen ist, das am oberen Ende von einem Paar von gegenüberliegenden Wandabschnitten angeordnet ist.

6. Rasenmäher gemäß einem der Ansprüche 1 bis 5, wobei das Gehäuse (2) mit einer nach oben offenen Öffnung (6a), durch die der Grassammelbehälter (14) in das Gehäuse eingesetzt und davon entfernt werden kann, versehen ist, und wobei eine Abdeckung (7) zum Verschließen der Öffnung, wenn der Rasenmäher im Einsatz ist, zur Verfügung gestellt wird.

7. Rasenmäher gemäß Anspruch 6, wobei die Abdeckung (7) drehbar am Gehäuse (2) angeordnet ist, so dass sie zwischen einer ersten Position, in der der Grassammelbehälter (14) in das Gehäuse eintreten oder dieses verlassen kann, und einer zweiten Position, in der die Öffnung (6a) geschlossen ist, bewegbar ist.

8. Rasenmäher gemäß einem der Ansprüche 1 bis 7, zusätzlich umfassend eine Klappe (16), die dem Abdeckgehäuse (1) zugeordnet ist, wobei die Klappe zwischen einer ersten Stellung, in der der Auslass (11a) der Schneidkammer (11) geschlossen ist und einer zweiten Stellung, in der der Auslass für den Durchtritt von geschnittenem Gras geöffnet ist, bewegbar ist.

9. Rasenmäher gemäß Anspruch 8, wobei die Klappe (16) drehbar an dem Abdeckgehäuse (1) in einer Position angeordnet ist, so dass sie in ihrer zweiten Position durch den Grassammelbehälter (14) gehalten wird, wenn der Einlass (14c) des Behälters auf den Auslass (11a) der Schneidkammer (11) ausgerichtet ist.

10. Rasenmäher gemäß einem der Ansprüche 8 oder 9, wobei die Klappe (16) eine Federvorspannung in Richtung auf ihre erste Stellung aufweist.

11. Rasenmäher gemäß einem der Ansprüche 7 bis 10, wobei wenn sich die Abdeckung (7) in der geschlossenen Stellung befindet, sie eine im wesentlichen luftdichte Abdichtung zu den Bereichen des Gehäuses (2) zur Verfügung stellt, die die nach oben offene Öffnung (6a) abgrenzen.

12. Rasenmäher gemäß einem der Ansprüche 1 bis 11, wobei die drehbaren Bauelemente Räder (8, 9) sind.

13. Rasenmäher gemäß Anspruch 12, wobei zwei Räder (8) an der Vorderseite des Abdeckgehäuses und zwei Räder (9) an der Rückseite des Abdeckgehäuses vorgesehen sind.

14. Rasenmäher gemäß Anspruch 13, zusätzlich umfassend eine Walze (8), die zwischen den beiden hinteren Rädern (9) angeordnet ist.

15. Rasenmäher gemäß einem der Ansprüche 1 bis 14, wobei der Einlass des Grassammelbehälters (14) in der vordersten Wand des Behälters vorgesehen ist.

## Revendications

1. Tondeuse à gazon comprenant un carter (1) définissant une chambre de coupe (11), le carter comprenant un orifice de sortie (11a) destiné la sortie de l'herbe coupée hors de la chambre de coupe, une lame de coupe rotative (12) à l'intérieur de la chambre de coupe sur un arbre substantiellement vertical, et un panier de ramassage d'herbe (14) comportant une région perméable à l'air (14b) et un orifice d'admission (14c) destiné à l'entrée de l'herbe coupée en provenance de la chambre de coupe, le carter étant monté sur des éléments rotatifs (8,9) en des emplacements arrière et avant, dans laquelle l'orifice d'entrée du panier de ramassage d'herbe est disposé sur la paroi frontale du panier, l'orifice de sortie de la chambre de coupe est aligné avec l'orifice d'admission du panier de ramassage d'herbe, **caractérisée en ce que** le panier de ramassage d'herbe est placé au dessus du carter pratiquement totalement à l'intérieur de l'empattement de la tondeuse à gazon, un passage substantiellement rectiligne (15) étant disposé entre l'orifice de sortie de la chambre de coupe et l'orifice d'admission du panier de ramassage d'herbe, et le carter supportant une enveloppe (2), laquelle renferme le panier de ramassage d'herbe.

2. Tondeuse à gazon selon la revendication 1, comportant en outre un moteur (10) placé à l'intérieur de l'enveloppe (2), le moteur étant en engagement d'entraînement avec la lame de coupe (12).

3. Tondeuse à gazon selon la revendication 1 ou la revendication 2, dans laquelle la chambre de coupe (11) est placée en avant du panier de ramassage d'herbe (14).

4. Tondeuse à gazon selon l'une quelconque des revendications 1 à 3, dans laquelle le panier de ramassage d'herbe (14) est un panier ouvert sur le dessus dont l'une au moins des parois est constituée de parties perméables à l'air (14b).

5. Tondeuse à gazon selon l'une quelconque des revendications 1 à 4, dans laquelle le panier de ramassage d'herbe (14) est muni d'une paire de poignées (14a) placées au sommet d'une paire de parties de parois opposées.

6. Tondeuse à gazon selon l'une quelconque des revendications 1 à 5, dans laquelle l'enveloppe (2) est munie d'une ouverture s'ouvrant vers le haut (6a) à travers laquelle le panier de ramassage d'herbe (14) peut être introduit dans, et retiré de l'enveloppe, et qui est munie d'un couvercle (7) pour fermer ladite ouverture lorsque la tondeuse à gazon est en cours d'utilisation.

7. Tondeuse à gazon selon la revendication 6, dans laquelle le couvercle (7) est monté de façon pivotante sur l'enveloppe (2) pour un déplacement dans une première position dans laquelle le panier de ramassage d'herbe (14) peut entrer dans ou sortir de l'enveloppe, et une seconde position dans laquelle l'ouverture (6a) est fermée.

8. Tondeuse à gazon selon l'une quelconque des revendications 1 à 7, comprenant en outre un volet mobile (16) associé au carter (1), le volet mobile étant déplaçable entre une première position, dans laquelle l'orifice de sortie (11a) de la chambre de coupe est fermé, et une seconde position dans laquelle ledit orifice est ouvert pour le passage de l'herbe coupée à travers celui-ci.

9. Tondeuse à gazon selon la revendication 8, dans laquelle le volet mobile (16) est monté de façon pivotante sur le carter (1) dans une position telle qu'il est maintenu dans sa seconde position par le panier de ramassage d'herbe (14) lorsque l'orifice d'admission (14c) du panier est aligné avec l'orifice de sortie (11a) de la chambre de coupe (11).

10. Tondeuse à gazon selon la revendication 8 ou la revendication 9, dans laquelle le volet mobile (16) est sollicité vers sa première position au moyen d'un ressort.

11. Tondeuse à gazon selon l'une quelconque des revendications 7 à 10, dans laquelle, lorsque le couvercle (7) est en position fermée, celui-ci forme en s'appuyant contre les parties de l'enveloppe (2) qui délimitent l'ouverture s'ouvrant vers le haut (6a) une fermeture substantiellement étanche à l'air.

12. Tondeuse à gazon selon l'une quelconque des revendications 1 à 11, dans laquelle les éléments rotatifs sont des roues (8, 9).

13. Tondeuse à gazon selon la revendication 12, dans laquelle deux roues (8) sont à l'avant du carter et deux roues (9) à l'arrière du carter.

14. Tondeuse à gazon selon la revendication 13, comprenant en outre un rouleau (8) placé entre les deux roues arrière (9).

15. Tondeuse à gazon selon l'une quelconque des revendications 1 à 14, dans laquelle l'orifice d'admission du panier de ramassage d'herbe est disposé sur la paroi la plus en avant du panier.
